# EUROPÄISCHE PATENTSCHRIFT

(11) **EP 3 700 720 B1**
(45) Veröffentlichungstag und Bekanntmachung des Hinweises auf die Patenterteilung: **21.05.2025**
(21) Anmeldenummer: 18786311.3
(22) Anmeldetag: 12.10.2018
(51) Int. Cl.: B25J 15/02, B25J 19/00

(54) **GREIF- ODER SPANNVORRICHTUNG, ZUGEHÖRIGER FUNKTIONSMECHANISMUS SOWIE ZUGEHÖRIGER BAUKASTEN**
GRIPPING OR CLAMPING DEVICE, ASSOCIATED FUNCTIONAL MECHANISM AND ASSOCIATED MODULAR SYSTEM
DISPOSITIF DE PRÉHENSION OU DE SERRAGE, MÉCANISME FONCTIONNEL ASSOCIÉ, AINSI QUE MODULE ASSOCIÉ

(30) Priorität: 23.10.2017 DE 102017124720
(43) Veröffentlichungstag der Anmeldung: 02.09.2020
(73) Patentinhaber: SCHUNK SE & Co. KG Spanntechnik Greiftechnik Automatisierungstechnik, 74348 Lauffen am Neckar (DE)
(72) Erfinder: FELLHAUER, Bruno, 74336 Brackenheim (DE); DRAB, Michael, 6314 Unterägeri (CH)
(74) Vertreter: DREISS Patentanwälte PartG mbB
(86) Internationale Anmeldenummer: PCT/EP2018/077850
(87) Internationale Veröffentlichungsnummer: WO 2019/081228

(56) Entgegenhaltungen:
- EP-A2- 2 581 170
- DE-A1- 102005 058 312
- DE-A1- 102016 004 924
- GB-A- 2 147 268

## Beschreibung

Die Erfindung betrifft eine Greif- oder Spannvorrichtung mit einem Grundgehäuse, mit wenigstens einer Grundbacke und mit vorzugsweise zwei aufeinander zu und voneinander weg verfahrbaren Grundbacken, wobei die wenigstens eine Grundbacke mit wenigstens einem Arbeitskolben bewegungsgekoppelt ist. Der Arbeitskolben ist dabei insbesondere in einem Arbeitszylinder verfahrbar und begrenzt einen Arbeitsdruckraum, so dass bei Druckbeaufschlagung des Arbeitsdruckraums die Grundbacken verfahren werden.

Aus der GB 2 147 268 A ist eine solche Greif- oder Spannvorrichtung bekannt. Dort wird der Anschlussabschnitt von einem Zylinderabschnitt des Koppelglieds gebildet, der sich vollständig im Gehäuse befindet. Um den Zylinderabschnitt herum ist eine geteilte Buchse zur Festsetzung des Koppelglieds vorgesehen.

Greif- oder Spannvorrichtungen ohne eine Brems- und/oder Festsetzeinheit sind beispielsweise bekannt aus der DE 100 13 022 C2 oder DE 101 38 685 C1.

Ferner ist aus der DE 2011 084 177 A1 bekannt, ein Dämpfungselement zwischen dem Antrieb der Greifbacke und der Greifbacke vorzusehen. Aus der DE 10 2013 211 528 A1 ist bekannt, ein elastisches Federelement zur Greifkrafterhaltung vorzusehen.

Der EP 2 581 170 A2 ist eine Greifvorrichtung mit einer Bremseinheit bekannt, wobei die Bremseinheit außerhalb eines Grundgehäuse angeordnet ist. Die Bremseinheit wird dabei auf einen Schaft, der über Ritzel mit Zahnstangen zusammenwirkt, wobei die Zahnstangen an einem verfahrbaren Zylinder angeordnet sind.

Der Erfindung liegt die Aufgabe zugrunde, eine Greif- oder Spanneinheit bereitzustellen, mit der auf einfache Art und Weise ein präzises und sicheres Greifen sowie ein universeller Einsatz möglich ist.

Diese Aufgabe wird gelöst durch eine Greif- oder Spannvorrichtung mit den Merkmalen des Patentanspruchs 1. Folglich ist insbesondere vorgesehen, dass das freie Ende des Koppelglieds den Anschlussabschnitt zur Bewegungskopplung des Koppelglieds mit dem Funktionsmechanismus bildet und dass das Grundgehäuse eine Öffnung derart aufweist, dass der Anschlussabschnitt von außerhalb des Grundgehäuses zugänglich ist. Der Funktionsmechanismus ist dabei zur Bewegungsmanipulation und/oder zur Lagebestimmung der Grundbacke vorgesehen. Ferner ist vorgesehen, dass das Grundgehäuse eine Aufnahme für das Koppelglied derart aufweist, dass das Koppelglied austauschbar am oder im Grundgehäuse angeordnet ist. Dies hat den Vorteil, dass das Koppelglied, je nach vorzusehendem Funktionsmechanismus, unterschiedlich ausgebildet sein kann und auf einfache Art und Weise ausgetauscht werden kann. Es können folglich unterschiedliche Koppelglieder Verwendung finden. Denkbar ist, dass das Koppelglied ein Antriebsglied eines Antriebs, ein Bremsglied einer Bremseinheit, ein Festsetzglied einer Festsetzeinheit, ein Messglied einer Messeinheit, ein Synchronisationsglied einer Synchronisationseinheit oder ein Steuer-/Regelglied einer Steuer- und/oder Regeleinheit ist.

Durch Vorsehen des Anschlussabschnitts kann folglich die Bewegung der Arbeitskolben, und damit die Bewegung der Grundbacken, insbesondere bewegungsmanipuliert und/oder lagebestimmt werden. Davon umfasst ist auch, dass Grundbacke über den Funktionsmechanismus mit anderen Komponenten synchronisiert und/oder geregelt oder angesteuert werden kann. Eine Manipulation kann insbesondere durch ein zusätzliches Antreiben, zusätzliches Abbremsen und/oder durch ein Festsetzen des Koppelgliedes, und damit der Grundbacken, über eine entsprechende Krafteinwirkung auf den Anschlussabschnitt erfolgen.

Eine derartige Greif- oder Spannvorrichtung kann folglich universell eingesetzt werden und je nach an die Vorrichtung gestellten Anforderungen über den Anschlussabschnitt mit einem geeigneten Funktionsmechanismus versehen werden, wodurch die Greif- oder Spannvorrichtung sehr flexibel einsetzbar ist. Dadurch, dass lediglich ein entsprechender Funktionsmechanismus bereitgestellt werden muss, kann die erfindungsgemäße Greif- oder Spannvorrichtung in unterschiedlichsten Anwendungen mit unterschiedlichen Funktionsmechanismen zum Einsatz kommen.

Ferner ist vorteilhaft, wenn der Anschlussabschnitt ein Mitnahmeprofil zur Drehkopplung eines funktionsmechanismusseitigen Drehglieds vorsieht. Das Drehglied des Funktionsmechanismus kann dann zur Drehkopplung insbesondere formschlüssig mit dem Mitnahmeprofil zusammenwirken.

Dabei ist denkbar, dass das Mitnahmeprofil an der freien Stirnseite des Koppelglieds oder um die freie Stirnseite des Koppelglieds herum angeordnet ist. Das Drehglied kann dann insbesondere auf das Koppelglied aufgesteckt oder in dieses hineingesteckt werden.

Um ein günstiges Zusammenwirken des Anschlussabschnitts mit dem Drehglied des Funktionsmechanismus zu ermöglichen, ist es vorteilhaft, wenn die freie Stirnseite des Anschlussabschnitts wenigstens weitgehend bündig mit der Oberfläche des Gehäuses abschließt.

Ferner ist vorteilhaft, wenn zwei parallel zueinander verlagerbare Arbeitskolben vorgesehen sind, wobei jeder Arbeitskolben einen Koppelabschnitt aufweist, und wobei zwischen den beiden Koppelabschnitten das mit den beiden Koppelabschnitten bewegungsgekoppelte Koppelglied vorgesehen ist. Durch vorsehen des Koppelglieds kann eine synchrone Bewegung der beiden Grundbacken realisiert werden. Dennoch können vergleichsweise hohe Greifkräfte bereitgestellt werden, da beide Arbeitskolben mit einem Arbeitsdruck beaufschlagt werden können. Zudem können auch unterschiedliche Greifkräfte realisiert werden, beispielsweise dann, wenn nur ein Arbeitskolben mit dem Arbeitsdruck beaufschlagt wird. Durch Vorsehen des Koppelglieds zwischen den beiden Arbeitskolben kann eine Manipulation der Kolben zeitgleich und/oder eine Lagebestimmung beider Kolben, und damit beider Grundbacken über lediglich das eine Koppelglied erreicht werden.

Die Bewegungskopplung zwischen dem Koppelglied und dem Koppelabschnitt der beiden Arbeitskolben kann insbesondere über eine formschlüssige Kopplung, beispielsweise in Form von einem am Koppelglied vorgesehenen Ritzel, das mit an dem Koppelabschnitt vorgesehenen Zähnen zusammenwirkt, realisiert sein. Denkbar ist auch eine andere Art der Bewegungskopplung, beispielsweise eine reibschlüssige bzw. kraftschlüssige Kopplung, oder eine Kopplung, mit der eine Momentenbegrenzung erreicht werden kann.

Der Anschlussabschnitt sieht insbesondere ein geeignetes Mitnahmeprofil vor, über welches der jeweilige Funktionsmechanismus mit dem Koppelglied bewegungsgekoppelt werden kann. Das Mitnahmeprofil kann beispielsweise als Ritzel, als Kant- oder Rundprofil, beispielsweise als Innensechskant oder Innensechsrundprofil, als Außensechskantprofil, Schlitz- oder Kreuzschlitzprofil oder dergleichen realisiert sein.

Gemäß der Erfindung kann vorgesehen sein, dass der Anschlussabschnitt innerhalb des Gehäuses angeordnet ist oder aus dem Gehäuse herausragt. Eine Anordnung innerhalb des Gehäuses hat den Vorteil, dass eine derartige Greif- oder Spanvorrichtung auch ohne angeschlossenen Funktionsmechanismus betrieben werden kann, und zwar ohne dass zusätzlich Bauraum beansprucht wird. Der Anschlussabschnitt kann allerdings auch aus dem Gehäuse herausragen, so dass an den Anschlussabschnitt der Funktionsmechanismus auf einfache Art und Weise angeschlossen werden kann.

Es hat sich als vorteilhaft herausgestellt, wenn eine Lagerbuchse zur Lagerung des Koppelglieds vorgesehen ist, die zum Austausch des Koppelglieds lösbar am Gehäuse angeordnet ist. Die Lagerbuchse kann insbesondere einen Wellenabschnitt des Koppelglieds aufnehmen. Zum Austausch des Koppelglieds kann vorgesehen sein, dass die Lagerbuchse, die beispielsweise mittels Schrauben am Grundgehäuse befestigt ist, gelöst und entfernt wird. Das Koppelglied kann ferner so ausgebildet sein, dass es nach Entfernen der Lagerbuchse entlang seiner Drehachse aus dem Grundgehäuse heraus entnommen werden kann.

Das Koppelglied kann ferner einen Wirkabschnitt, der mit dem Koppelabschnitt zusammenwirkt und wenigstens einen Wellenabschnitt mit dem Anschlussabschnitt aufweisen. Der Wirkabschnitt kann, wie bereits erwähnt, beispielsweise eine Verzahnung aufweisen, die mit einer an dem Koppelabschnitt vorgesehenen Gegenverzahnung zusammenwirkt. Der Wellenabschnitt kann beispielsweise zur Drehlagerung des Koppelglieds dienen, insbesondere zur Aufnahme einer Lagerbuchse. Der Anschlussabschnitt ist vorzugsweise im Bereich des freien Endes des Wellenabschnitts bzw. im Bereich des Wellenabschnitts, der aus dem Grundgehäuse herausragt, angeordnet.

Zur Erreichung einer ausreichenden Vorspannkraft ist vorteilhaft, wenn zwischen dem Koppelabschnitt und einem an der jeweiligen Grundbacke vorgesehenen Mitnehmer ein elastisches Vorspannelement vorgesehen ist.

Die beiden Arbeitskolben weisen vorzugsweise eine oder zwei druckbeaufschlagbare Arbeitskolbenflächen auf sowie jeweils eine Arbeitskolbenstange, wobei der jeweilige Koppelabschnitt an der jeweiligen Arbeitskolbenstange vorgesehen ist.

Die an den Arbeitskolbenstangen vorgesehenen Koppelabschnitte können entweder einstückig mit der Arbeitskolbenstange oder als separates Bauteil ausgebildet sein. Für den Fall, dass die Koppelabschnitte als separates Bauteil ausgebildet sind, ist vorteilhaft, wenn die jeweilige Arbeitskolbenstange eine Aussparung zur Aufnahme des jeweiligen Koppelabschnitts aufweist. Hierdurch kann auf kleinem Bauraum eine Anordnung des Koppelabschnitts vorgesehen sein. Zudem können Kräfte auf sichere Art und Weise übertragen werden.

Die jeweiligen Koppelabschnitte können dabei jeweils einen mit dem Koppelglied zusammenwirkenden Wirkabschnitt aufweisen, der sich in einen Bereich zwischen dem Koppelglied und der Koppelstange erstreckt. Die Koppelstange kann beispielsweise einen Viertelkreis-Querschnitt vorsehen, an welcher der Koppelabschnitt angeordnet ist. Zur sicheren Übertragung der Kräfte erstreckt sich dann der Wirkabschnitt vorzugsweise zwischen der Arbeitskolbenstange und dem Koppelglied, bzw. dessen Wirkabschnitt.

Die eingangs genannte Aufgabe wird auch gelöst durch eine Greif- oder Spanneinheit, die eine erfindungsgemäße Greif- oder Spannvorrichtung umfasst und die einen Funktionsmechanismus umfasst, der über den Anschlussabschnitt der Greif- oder Spannvorrichtung mit dieser gekoppelt ist.

Der Funktionsmechanismus kann dabei vorzugsweise in einem eigenen Ansatzgehäuse angeordnet sein, das an das Grundgehäuse angesetzt oder dort befestigt werden kann. Dies hat den Vorteil, dass verschiedene Funktionsmechanismen in verschiedenen Ansatzgehäusen vorgehalten werden können, und dass je nach Bedarfsfall der geeignete Funktionsmechanismus mit der Greif- oder Spannvorrichtung zum Einsatz kommen kann.

Die erfindungsgemäße Spanneinheit kann als Funktionsmechanismus vorsehen eine Antriebseinheit, eine Bremseinheit, eine Festsetzeinheit, eine Messeinheit, eine Synchronisationseinheit und/oder eine Regel- und/oder Steuereinheit.

Die eingangs genannte Aufgabe wird zudem gelöst durch ein Baukastensystem, das eine erfindungsgemäße Greif- oder Spannvorrichtung sowie unterschiedliche Koppelglieder mit Anschlussabschnitten zum Anschluss unterschiedlicher Funktionsmechanismen und/oder unterschiedliche Funktionsmechanismen zur Anordnung an die erfindungsgemäße Greif- oder Spannvorrichtung umfasst. Durch Vorhalten eines derartigen Baukastens können unterschiedliche Anforderungen durch die jeweilige Kombination von Greif- oder Spannvorrichtung und entsprechendem Funktionsmechanismus erfüllt werden.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1: eine perspektivische Ansicht einer erfindungsgemäßen Greifvorrichtung;
- Figur 2: eine Draufsicht auf die Greifvorrichtung gemäß Figur 1;
- Figur 3: einen Schnitt durch die Greifvorrichtung gemäß Figur 2 entlang der Linie III;
- Figur 4: einen Schnitt entlang der Linie IV in Figur 3;
- Figur 5: einen Schnitt entlang der Linie V in Figur 2;
- Figur 6: einen Schnitt entlang der Linie VI in Figur 4; und
- Figur 7: einen Längsschnitt durch einen Funktionsmechanismus für eine Greifvorrichtung gemäß den Figuren 1 bis 6.

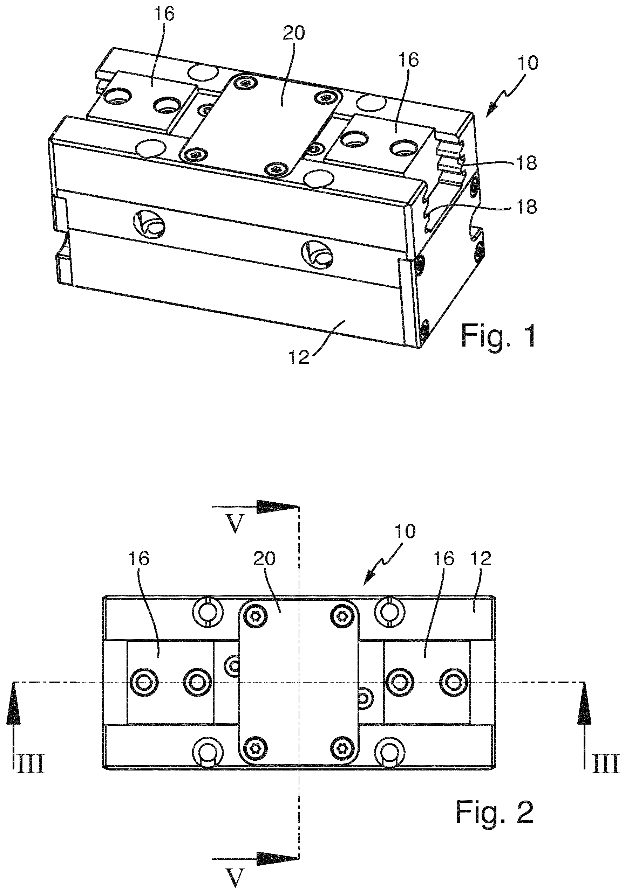

In den Figuren 1 bis 6 ist eine Greifvorrichtung 10 mit einem Grundgehäuse 12 gezeigt, in dem zwei Arbeitskolben 14 in jeweils einem Arbeitszylinder 15 verfahrbar angeordnet sind, wobei jeder Arbeitskolben 14 mit einer Grundbacke 16 bewegungsgekoppelt ist. Das Grundgehäuse 12 weist zur Führung der Grundbacken 16 Vielzahnführungen 18 auf. Im mittleren Bereich zwischen den Grundbacken 16 ist eine Abdeckplatte 20 am Grundgehäuse 12 befestigt.

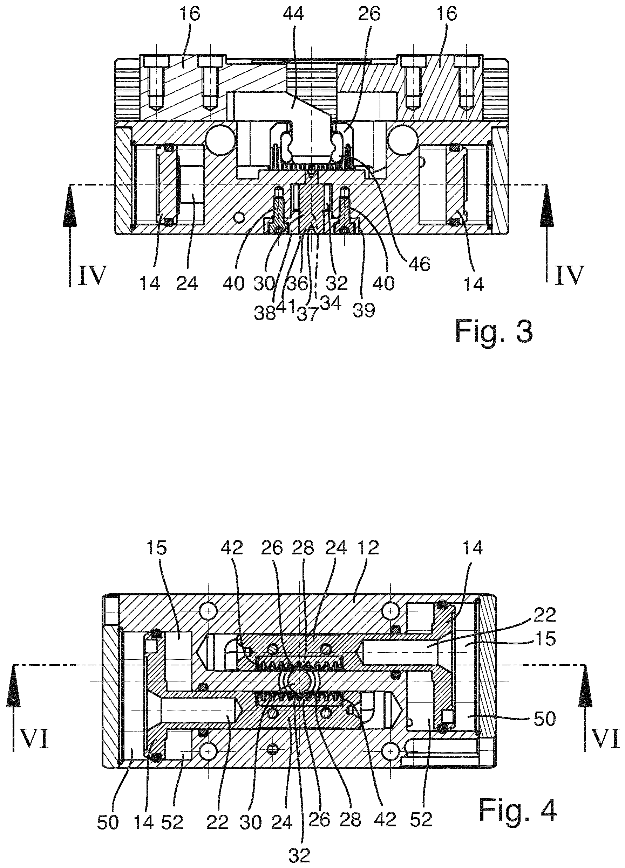

Wie insbesondere aus dem Schnitt gemäß Figur 4 hervorgeht, sind die beiden Arbeitskolben 14 entlang den Achsen 22 parallel zueinander verfahrbar. Die Arbeitskolben 14 umfassen ferner jeweils eine Arbeitskolbenstange 24, an der jeweils ein Koppelabschnitt 26 befestigt ist. Die Koppelabschnitte 26 weisen an den einander zugewandten Seiten jeweils einen Wirkabschnitt 28 in Form einer Linearverzahnung auf. Die beiden Koppelabschnitte 26 wirken über die Verzahnung 28 mit einem Koppelglied 30 zusammen, welches einen Wirkabschnitt 32 in Form eines Ritzels aufweist. Das Ritzel 32 kämmt dabei die Linearverzahnungen 28 der Koppelabschnitte 26.

Das Koppelglied 30 ist um eine Drehachse 34 drehbar angeordnet und synchronisiert die Bewegung der beiden Arbeitskolben 14 bzw. deren Arbeitskolbenstangen 24 und damit die Bewegung der Grundbacken 16.

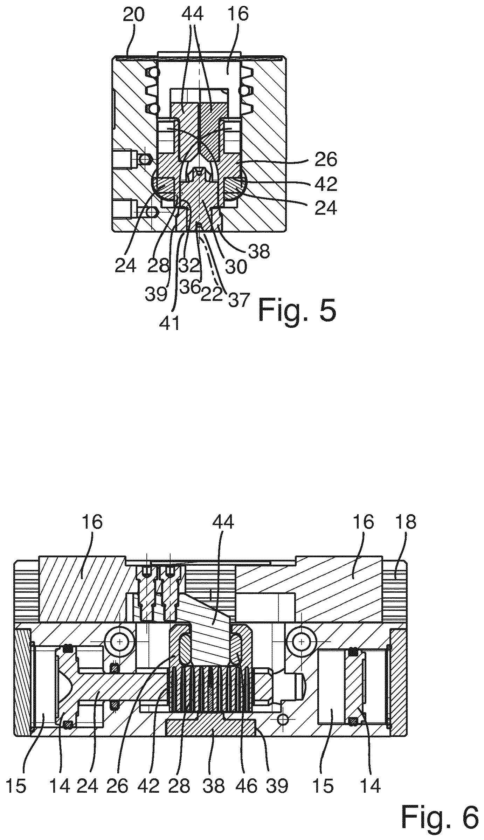

Wie insbesondere aus den Figuren 3 und 5 deutlich wird, weist das Koppelglied 30 einen Anschlussabschnitt 36 auf, der bündig mit der Außenseite des Grundgehäuses 12 verläuft und von außerhalb des Grundgehäuses 12 zugänglich ist.

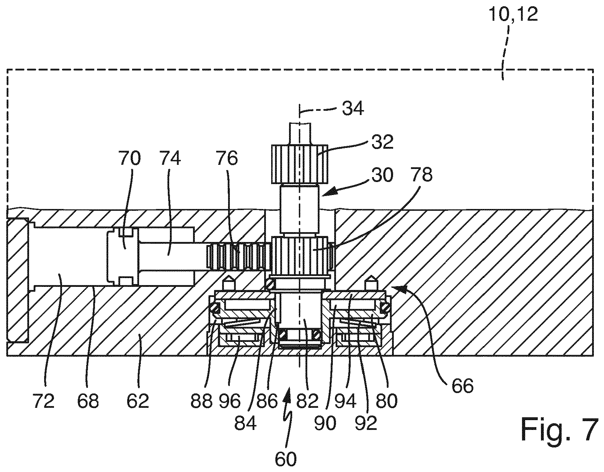

Der Anschlussabschnitt 36 ist dabei an der freie Stirnseite des Koppelglieds 30 angeordnet und umfasst ein Mitnahmeprofil 37. Das Mitnahmeprofil 37 kann als Innensechskant oder Innensechsrund ausgebildet sein, über den das Koppelglied 30 mit einem Funktionsmechanismus, wie er beispielsweise in Figur 7 dargestellt ist, verbunden werden kann.

Das Grundgehäuse 12 weist ferner eine Öffnung 41 derart auf, dass der Anschlussabschnitt 36 von außerhalb des Grundgehäuses 12 zugänglich ist.

Zur geeigneten Drehlagerung des Koppelglieds 30 ist eine in den Figuren 3 und 5 deutlich zu erkennende Lagerbuchse 38 vorgesehen, die mittels Befestigungsschrauben 40 in einer in der Öffnung 41 vorgesehenen Aufnahme 39 am Grundgehäuse 12 befestigt ist. Durch Lösen der Schrauben 40 kann die Lagerbuchse 38 sowie das Koppelglied 30 aus der Aufnahme 39 entfernt werden. Je nach vorzusehendem Funktionsmechanismus kann ein anders ausgebildetes Koppelglied 30 mit einem entsprechend ausgebildeten Anschlussabschnitt 36 Verwendung finden.

Wie insbesondere aus den Figuren 4, 5 und 6 deutlich wird, weisen die Arbeitskolbenstangen 24 eine Ausnehmung 42 auf, innerhalb welcher die Koppelabschnitte 26 angeordnet sind. Figur 5 zeigt, dass der Wirkabschnitt 28 der Koppelabschnitte 26 in einem Bereich zwischen der jeweiligen Arbeitskolbenstange 24 und dem Ritzel 32 des Koppelglieds 30 liegt. In diesem Bereich weisen die Arbeitskolbenstangen 24 einen viertelkreisförmigen Querschnitt auf.

Wie insbesondere aus den Figuren 3 und 6 deutlich wird, ist an den Grundbacken 16 jeweils ein Mitnehmer 44 vorgesehen, der mit dem jeweiligen Koppelabschnitt 26 bewegungsgekoppelt ist. Die Mitnehmer 44 sind mittels der in Figur 6 gezeigten Befestigungsschrauben mit den Grundbacken 16 starr verbunden. Zwischen dem jeweiligen Mitnehmer 44 und dem zugehörigen Koppelabschnitt 26 ist ein elastisches Element 46 vorgesehen, mit dem die Greifkraft aufrechterhalten werden kann bzw. welches eine Vorspannkraft beim Greifen eines Bauteils bereitstellt.

Im Betrieb werden die von den Arbeitskolben 14 begrenzten Arbeitsdruckräume 50, 52 wechselseitig mit Arbeitsdruck beaufschlagt, wodurch bei einer Druckbeaufschlagung der Arbeitsdruckräume 50 die Grundbacken 16 aufeinander zu bewegt werden und bei einer Druckbeaufschlagung der Arbeitsdruckräume 52 die Grundbacken 16 voneinander weg verfahren werden.

Als mit dem Abschlussabschnitt 36 zusammenwirkender Funktionsmechanismus kann beispielsweise eine Antriebseinheit Verwendung finden, die das Koppelglied 30, und damit die mit dem Koppelglied 30 bewegungsgekoppelten Grundbacken 16 antreibt. Ferner ist denkbar, eine Bremseinheit vorzusehen, mit der die Bewegung des Koppelglieds 30, und damit die Bewegung der Grundbacken 16 gebremst wird. Ferner ist denkbar, eine Festsetzeinheit vorzusehen, mit der das Koppelglied 30, und damit die Grundbacken 16 an einer Position festgesetzt werden können. Ferner ist denkbar, eine Messeinheit vorzusehen, mit der der Drehwinkel des Koppelglieds 30, und damit die Position der Grundbacken 16 gemessen werden kann. Auch denkbar ist, eine Synchronisationseinheit vorzusehen, mit der die Bewegung des Koppelglieds 30, und damit die Bewegung der Grundbacken 16 mit anderen Funktionskomponenten synchronisiert wird. Auch eine Regel- und/oder Steuereinheit kann vorgesehen sein, die in Abhängigkeit der Drehstellung des Koppelglieds 30 eines auf das Koppelglied 30 wirkenden Drehmoments und/oder einer auf das Koppelglied wirkenden Kraft andere Funktionskomponenten entsprechend ansteuert.

In der Figur 7 ist ein Funktionsmechanismus 60 gezeigt, der in einem Ansatzgehäuse 62 untergebracht ist. Das Ansatzgehäuse 62 kann dabei an das in Figur 7 gestrichelt gezeigte Grundgehäuse 12 der Greifvorrichtung 10 angeordnet werden. Bei dem Funktionsmechanismus 60 handelt es sich um einen Positionierantrieb 64 mit einer Festsetzeinheit 66. Durch Vorsehen eines solchen Funktionsmechanismus 60 kann eine sichere Zusammenarbeit der Greifvorrichtung 10, wie sie in den Figuren 1-6 gezeigt ist, mit einer menschlichen Person erfolgen, ohne dass von der Greifvorrichtung 10 eine Gefahr für die Person ausgeht.

Der Positionierantrieb 64 umfasst dabei einen Positionierzylinder 68 und einen darin verfahrbar angeordneten Positionierkolben 70. Der Positionierkolben 70 begrenzt einen Positionierdruckraum 72. Am Positionierkolben 70 ist eine Kolbenstange 74 vorgesehen, die einen Zahnabschnitt 76 aufweist. Die druckwirksame Fläche des Positionierkolbens 70 ist dabei kleiner als die druckwirksame Fläche der Arbeitskolben.

In der Figur 7 ist ein Koppelglied 30 gezeigt, dass an seinem oberen, freien Ende ein Ritzel 32 aufweist, das dazu vorgesehen ist, mit den Koppelabschnitten 26 der Greifvorrichtung 10, wie sie in den Figuren 1 bis 6 gezeigt ist, zusammenzuwirken. Das Koppelglied 30 sieht zudem ein weites Ritzel 78 vor, das mit dem Zahnabschnitt 76 der Kolbenstange 74 zusammenwirkt. Die freie Stirnseite des Anschlussabschnitts 36 über die Oberfläche des Gehäuses (12) herausragt.

Mit der Festsetzeinheit 66 können das Koppelglied 30 und damit auch die Grundbacken 16 festgesetzt werden. An dem dem Ritzel 78 abgewandten Ende des Koppelglieds 30 ist ein als Bremsscheibe ausgebildeter Flanschabschnitt 80 vorgesehen. Der Flanschabschnitt 80 ist in axialer Richtung auf dem Koppelglied 30, bzw. einem dafür vorgesehenen Zylinderabschnitt 82 axial verschiebbar. Der Flanschabschnitt 80 ist über eine am Zylinderabschnitt 82 vorgesehene Feder 84, die mit einer am Flanschabschnitt 80 vorgesehenen Aufnahmenut 86 zusammenwirkt, drehgekoppelt. Der Flanschabschnitt 80 ist in einem Festsetzzylinder 88 axial verlagerbar, wobei der Flanschabschnitt 80 einen Festsetzdruckraum 90 begrenzt. Auf der dem Festsetzdruckraum 90 abgewandten Seite ist ein Federelement 92 in Form einer Tellerfeder vorgesehen, welche den Flanschabschnitt 82 gegen ein Klemmelement 94 in Form einer Bremsscheibe drängt und bei Drucklosschaltung des Festsetzdruckraums 90 festsetzt. Auf der dem Flanschabschnitt 80 abgewandten Seite der Tellerfeder 92 ist ein Axiallager 96 vorgesehen.

Bei Druckbeaufschlagung des Festsetzdruckraums 90 wird der Flanschabschnitt 80 hin zur Tellerfeder 92 beaufschlagt, wodurch die Tellerfeder 92 komprimiert wird. Aufgrund des Vorsehens des Axiallagers 96 ist der Flanschabschnitt 80 auch bei komprimierter Tellerfeder 92 um die Achse 34 leicht drehbar; bei Druckbeaufschlagung des Festsetzdruckraums 90 wird folglich die Festsetzeinheit 66 gelöst und das Koppelglied 30 kann um seine Drehachse 34 verdreht werden.

Im Betrieb arbeitet die Greifvorrichtung 10 zusammen mit dem Funktionsmechanismus 60 wie folgt: Zunächst werden die Grundbacken 16 durch Druckbeaufschlagung des Positionierdruckraums 72 in die Greifposition bewegt, wobei die auf die Backe 16, bzw. auf an den Grundbacken 16 vorgesehene Aufsatzbacken wirkende Positionierkraft aufgrund der Wahl einer entsprechend großen druckwirksamen Fläche des Positionskolbens 70 eine zulässige Grenzkraft nicht überschreitet. Die Grenzkraft kann beispielsweise bei 140 Newton liegen. Mit Erreichen der Greifposition wird der entsprechende Arbeitsdruckraum 50, 52 mit Arbeitsdruck beaufschlagt; aufgrund der größeren druckwirksamen Fläche der Kolben 14 wirkt an den Backen 16 die eigentliche Greifkraft, die um ein Vielfaches höher sein kann als die Positionierkraft.

Eine Umschaltung des Arbeitsdrucks vom Positionierdruckraum 72 hin zum Arbeitsdruckraum 50 bzw. 52 kann beispielsweise über eine Schalteinrichtung erfolgen, wobei Sensoren vorgesehen sein können, die dann ein Umschalten bewirken, wenn festgestellt wird, dass die Grundbacken 16 ihre Greifpositionen erreichen.

Nachdem die Grundbacken 24 mit der Greifkraft beaufschlagt sind, wird das Koppelglied 30 mit der Festsetzeinheit 66 festgesetzt; der Festsetzdruckraum 90 wird also drucklos geschalten, wodurch die Tellerfeder 92 den Flanschabschnitt 80, und damit das Koppelglied 30 gegen das Klemmelement 94 drängt und damit festsetzt. Nach dem Festsetzen des Koppelglieds 30 erfolgt ein Drucklosschalten des Arbeitsdruckraums 50 bzw. 52. Aufgrund des Vorsehens der Vorspannelemente 46 kann auch dann eine ausreichend hohe Greifkraft zur Verfügung gestellt werden, wenn zwischen dem Flanschabschnitt 80 und den Grundbacken 16 ein gewisses mechanisches Spiel vorhanden ist.

Zum Lösen der Greifkraft kann die Festsetzeinheit 66 die Grundbacken 16 freigeben, wobei dies durch Druckbeaufschlagung des Festsetzdruckraums 90 mit Arbeitsdruck erfolgt. Das Rückfahren der Backen 16 kann durch Druckbeaufschlagung eines dem Positionierdruckraum 72 gegenüberliegenden Druckraums oder eines entsprechend vorzusehenden Federelements erfolgen.

Durch die Kombination der Greifvorrichtung 10 gemäß den Figuren 1 bis 6 und des im Ansatzgehäuse 62 vorgesehenen Positionierantriebs 64 mit der Festsetzeinheit 66 kann eine Greifeinheit bereitgestellt werden, die für eine Mensch-Maschine-Kollaboration geeignet ist.

## Patentansprüche

1. Greif- oder Spannvorrichtung (10) mit einem Grundgehäuse (12), mit zwei aufeinander zu und voneinander weg verfahrbaren Grundbacken (16), wobei die Grundbacken (16) mit zwei jeweils einen Arbeitsdruckraum (50, 52) begrenzende Arbeitskolben (14) bewegungsgekoppelt sind, wobei die Arbeitskolben (14) jeweils einen Koppelabschnitt (26) aufweisen, und wobei ein mit den Koppelabschnitten (26) bewegungsgekoppeltes, um eine Drehachse (22) drehbar angeordnetes Koppelglied (30) vorgesehen ist, wobei das Koppelglied (30) eine synchrone Bewegung der beiden Grundbacken (16) realisiert, wobei das Koppelglied (30) einen Anschlussabschnitt (36) zum Anschluss an einen Funktionsmechanismus (60) aufweist, wobei das freie Ende des Koppelglieds (30) den Anschlussabschnitt (36) zur Bewegungskopplung des Koppelglieds (30) mit dem Funktionsmechanismus bildet , wobei das Grundgehäuse (12) eine Öffnung (41) derart aufweist, dass der Anschlussabschnitt (36) von außerhalb des Grundgehäuses (12) zugänglich ist und wobei das Grundgehäuse (12) eine Aufnahme (39) für das Koppelglied (30) derart aufweist, dass das Koppelglied (30) austauschbar am oder im Grundgehäuse (12) angeordnet ist.

2. Greif- oder Spannvorrichtung (10) nach Anspruch 1, **dadurch gekennzeichnet, dass** der Anschlussabschnitt (36) ein Mitnahmeprofil (37) zur Drehkopplung eines funktionsmechanismusseitigen Drehglieds vorsieht.

3. Greif- oder Spannvorrichtung (10) nach Anspruch 2, **dadurch gekennzeichnet, dass** das Mitnahmeprofil (37) an der freien Stirnseite des Koppelglieds (30) angeordnet ist.

4. Greif- oder Spannvorrichtung (10) nach Anspruch 2 oder 3, **dadurch gekennzeichnet, dass** das Mitnahmeprofil (37) um die freie Stirnseite des Koppelglieds (30) herum angeordnet ist.

5. Greif- oder Spannvorrichtung (10) nach einem der vorhergehenden Ansprüche, **dadurch gekennzeichnet, dass** die freie Stirnseite des Anschlussabschnitts (36) wenigstens weitgehend bündig mit der Oberfläche des Gehäuses abschließt.

6. Greif- oder Spannvorrichtung (10), nach einem der vorhergehenden Ansprüche, **dadurch gekennzeichnet, dass** zwei parallel zueinander verlagerbare Arbeitskolben (14) vorgesehen sind, dass jeder Arbeitskolben (14) einen Koppelabschnitt (26) aufweist, und dass zwischen den beiden Koppelabschnitten (26) das mit den beiden Koppelabschnitten (26) bewegungsgekoppelte Koppelglied (30) vorgesehen ist.

7. Greif- oder Spannvorrichtung (10) nach einem der vorhergehenden Ansprüche, **dadurch gekennzeichnet, dass** der Anschlussabschnitt (36) innerhalb des Grundgehäuses (12) angeordnet ist oder durch die Öffnung (41) aus dem Grundgehäuse (12) herausragt.

8. Greif- oder Spannvorrichtung (10) nach einem der vorhergehenden Ansprüche, **dadurch gekennzeichnet, dass** eine Lagerbuchse (38) zur Lagerung des Koppelglieds (30) vorgesehen ist, die zum Austauschen des Koppelglieds (30) lösbar am Grundgehäuse (12) angeordnet ist.

9. Greif- oder Spannvorrichtung (10) nach einem der vorhergehenden Ansprüche, **dadurch gekennzeichnet, dass** das Koppelglied (30) einen Wirkabschnitt (32) aufweist, der mit dem Koppelabschnitt (26) zusammenwirkt, und wenigstens einen Wellenabschnitt mit dem Anschlussabschnitt (36).

10. Greif- oder Spannvorrichtung (10) nach einem der vorhergehenden Ansprüche, **dadurch gekennzeichnet, dass** zwischen dem Koppelabschnitt (30) und einem an der jeweiligen Grundbacke (16) vorgesehenen Mitnehmer (44) ein elastisches Vorspannelement (46) vorgesehen ist.

11. Greif- oder Spanneinheit umfassend eine Greif- oder Spannvorrichtung (10) nach einem der vorhergehenden Ansprüche und einen mit der Greif- oder Spannvorrichtung (10) über den Anschlussabschnitt (36) angeschlossen Funktionsmechanismus (60) zur Bewegungsmanipulation und/oder zur Lagebestimmung der Grundbacke (16).

12. Greif- oder Spanneinheit nach dem vorhergehenden Anspruch, **dadurch gekennzeichnet, dass** der Funktionsmechanismus (60) innerhalb eines Ansatzgehäuses (62) angeordnet ist und dass das Ansatzgehäuse (62) am Grundgehäuse (12) angeordnet ist.

13. Greif- oder Spanneinheit nach Anspruch 11 oder 12, **dadurch gekennzeichnet, dass** der Funktionsmechanismus (60) als Antriebeinheit, Bremseinheit, Festsetzeinheit, Messeinheit, Synchronisationseinheit und/oder Regel- und/oder Steuereinheit ausgebildet ist.

14. Baukasten umfassend eine Greif- oder Spannvorrichtung (10) nach einem der Ansprüche 1 bis 13 und unterschiedliche Koppelglieder (30) mit Anschlussabschnitten (36) zum Anschluss unterschiedlicher Funktionsmechanismen (60) und/oder unterschiedliche Funktionsmechanismen (60) zur Anordnung an die Greif- oder Spannvorrichtung (10).

## Claims

1. Gripping or clamping device (10) having a main housing (12), and having two main jaws (16) which can be moved toward and away from each other, wherein the main jaws (16) are movement-coupled to two working pistons (14) that each delimit a working pressure chamber (50, 52), wherein the working pistons (14) each have a coupling portion (26), and wherein a coupling member (30) is provided which is movement-coupled to the coupling portions (26) and arranged to rotate about a rotation axis (22), wherein the coupling member (30) realizes a synchronous movement of the two main jaws (16), wherein the coupling member (30) has a connecting portion (36) for connection to a functional mechanism (60), wherein the free end of the coupling member (30) forms the connecting portion (36) for the movement-coupling of the coupling member (30) to the functional mechanism, wherein the main housing (12) has an opening (41) such that the connecting portion (36) is accessible from outside the main housing (12) and wherein the main housing (12) has a receptacle (39) for the coupling member (30) such that the coupling member (30) is arranged replaceably on or in the main housing (12).

2. Gripping or clamping device (10) according to claim 1, **characterized in that** the connecting portion (36) provides a driving profile (37) for the rotary coupling of a rotary member on the functional mechanism side.

3. Gripping or clamping device (10) according to claim 2, **characterized in that** the driving profile (37) is arranged on the free end face of the coupling member (30).

4. Gripping or clamping device (10) according to claim 2 or 3,
**characterized in that** the driving profile (37) is arranged around the free end face of the coupling member (30).

5. Gripping or clamping device (10) according to any of the preceding claims, **characterized in that** the free end face of the connecting portion (36) is at least largely flush with the surface of the housing.

6. Gripping or clamping device (10) according to any of the preceding claims, **characterized in that** two working pistons (14) which can be moved in parallel with one another are provided, **in that** each working piston (14) has a coupling portion (26), **and in that** the coupling member (30) which is coupled in movement to the two coupling portions (26) is provided between the two coupling portions (26).

7. Gripping or clamping device (10) according to any of the preceding claims, **characterized in that** the connecting portion (36) is arranged within the main housing (12) or protrudes from the main housing (12) through the opening (41).

8. Gripping or clamping device (10) according to any of the preceding claims, **characterized in that** a bearing bush (38) is provided for supporting the coupling member (30), which is detachably arranged on the main housing (12) for replacing the coupling member (30).

9. Gripping or clamping device (10) according to any of the preceding claims, **characterized in that** the coupling member (30) has an active portion (32) which cooperates with the coupling portion (26), and at least one shaft portion having the connecting portion (36).

10. Gripping or clamping device (10) according to any of the preceding claims, **characterized in that** an elastic prestressing element (46) is provided between the coupling portion (30) and a driver (44) provided on the particular main jaw (16).

11. Gripping or clamping unit comprising a gripping or clamping device (10) according to any of the preceding claims and a functional mechanism (60) connected to the gripping or clamping device (10) via the connecting portion (36) for manipulating movement and/or for determining the position of the main jaw (16).

12. Gripping or clamping unit according to the preceding claim, **characterized in that** the functional mechanism (60) is arranged within an attachment housing (62) **and in that** the attachment housing (62) is arranged on the main housing (12).

13. Gripping or clamping unit according to claim 11 or 12, **characterized in that** the functional mechanism (60) is designed as a drive unit, braking unit, locking unit, measuring unit, synchronization unit and/or closed-loop and/or open-loop control unit.

14. Construction kit comprising a gripping or clamping device (10) according to any of claims 1 to 13 and different coupling members (30) having connecting portions (36) for connecting different functional mechanisms (60) and/or different functional mechanisms (60) for arrangement on the gripping or clamping device (10).

## Revendications

1. Dispositif de préhension ou de serrage (10) avec un boîtier de base (12), avec deux mâchoires de base (16) pouvant se rapprocher et s'éloigner l'une de l'autre, dans lequel les mâchoires de base (16) sont couplées en mouvement avec deux pistons de travail (14) délimitant chacun une chambre de pression de travail (50, 52), dans lequel les pistons de travail (14) présentent chacun une section de couplage (26), et dans lequel un élément de couplage (30) couplé en mouvement avec les sections de couplage (26), disposé de manière à pouvoir tourner autour d'un axe de rotation (22) est prévu, dans lequel l'élément de couplage (30) réalise un mouvement synchrone des deux mâchoires de base (16), dans lequel l'élément de couplage (30) présente une section de raccordement (36) pour le raccordement à un mécanisme fonctionnel (60), dans lequel l'extrémité libre de l'élément de couplage (30) forme la section de raccordement (36) pour le couplage en mouvement de l'élément de couplage (30) avec le mécanisme fonctionnel, dans lequel le boîtier de base (12) présente une ouverture (41) de telle sorte que la section de raccordement (36) est accessible depuis l'extérieur du boîtier de base (12) et dans lequel le boîtier de base (12) présente un logement (39) pour l'élément de couplage (30), de telle sorte que l'élément de couplage (30) est disposé de manière interchangeable sur ou dans le boîtier de base (12).

2. Dispositif de préhension ou de serrage (10) selon la revendication 1, **caractérisé en ce que** la section de raccordement (36) fournit un profil d'entraînement (37) pour le couplage en rotation d'un élément rotatif côté mécanisme de fonctionnement.

3. Dispositif de préhension ou de serrage (10) selon la revendication 2, **caractérisé en ce que** le profil d'entraînement (37) est disposé sur la face frontale libre de l'élément de couplage (30).

4. Dispositif de préhension ou de serrage (10) selon la revendication 2 ou 3, **caractérisé en ce que** le profil d'entraînement (37) est disposé autour de la face frontale libre de l'élément de couplage (30).

5. Dispositif de préhension ou de serrage (10) selon l'une quelconque des revendications précédentes, **caractérisé en ce que** la face frontale libre de la section de raccordement (36) se termine au moins en grande partie à fleur de la surface du boîtier.

6. Dispositif de préhension ou de serrage (10), selon l'une quelconque des revendications précédentes, **caractérisé en ce que** deux pistons de travail (14) déplaçables parallèlement l'un à l'autre sont prévus, que chaque piston de travail (14) présente une section de couplage (26), et qu'entre les deux sections de couplage (26) est prévu l'élément de couplage (30) couplé en mouvement avec les deux sections de couplage (26).

7. Dispositif de préhension ou de serrage (10) selon l'une quelconque des revendications précédentes, **caractérisé en ce que** la section de raccordement (36) est disposée à l'intérieur du boîtier de base (12) ou fait saillie hors du boîtier de base (12) à travers l'ouverture (41).

8. Dispositif de préhension ou de serrage (10) selon l'une quelconque des
revendications précédentes, **caractérisé en ce qu'**un coussinet (38) pour le logement de l'élément de couplage (30), qui est disposé de manière amovible sur le boîtier de base (12) pour le remplacement de l'élément de couplage (30), est prévu.

9. Dispositif de préhension ou de serrage (10) selon l'une quelconque des revendications précédentes, **caractérisé en ce que** l'organe de couplage (30) présente une section active (32) qui coopère avec la section de couplage (26) et au moins une section d'arbre avec la section de raccordement (36).

10. Dispositif de préhension ou de serrage (10) selon l'une quelconque des revendications précédentes, **caractérisé en ce qu'**un élément de précontrainte élastique (46) est prévu entre la section de couplage (30) et un entraîneur (44) prévu sur la mâchoire de base (16) respective.

11. Unité de préhension ou de serrage comprenant un dispositif de préhension ou de serrage (10) selon l'une quelconque des revendications précédentes et un mécanisme fonctionnel (60) raccordé au dispositif de préhension ou de serrage (10) par la section de raccordement (36) pour la manipulation en mouvement et/ou pour la détermination de la position de la mâchoire de base (16).

12. Unité de préhension ou de serrage selon la revendication précédente, **caractérisée en ce que** le mécanisme de fonctionnement (60) est disposé à l'intérieur d'un boîtier d'embout (62) et **en ce que** le boîtier d'embout (62) est disposé sur le boîtier de base (12).

13. Unité de préhension ou de serrage selon la revendication 11 ou 12, **caractérisée en ce que** le mécanisme de fonctionnement (60) est réalisé comme une unité d'entraînement, unité de freinage, unité de blocage, unité de mesure, unité de synchronisation et/ou unité de régulation et/ou de commande.

14. Système modulaire comprenant un dispositif de préhension ou de serrage (10) selon l'une quelconque des revendications 1 à 13 et différents éléments de couplage (30) avec des sections de raccordement (36) pour le raccordement de différents mécanismes fonctionnels (60) et/ou différents mécanismes fonctionnels (60) à disposer sur le dispositif de préhension ou de serrage (10).
